# EUROPEAN PATENT APPLICATION

(11) **EP 0 930 730 A2**
(43) Date of publication of application: **21.07.1999**
(21) Application number: 99300303.7
(22) Date of filing: 18.01.1999
(51) Int. Cl.: H04B 10/17

(54) **An optical repeater**

(30) Priority: 20.01.1998 GB 9801184
(71) Applicant: ALCATEL, 75008 Paris (FR)
(72) Inventor: Simeonidou, Dimitra, Purley, Surrey CR8 1ED (GB)
(74) Representative: Finnie, Peter John

(57) **Abstract**

The invention relates to an optical amplifier for use as an optical repeater in a high capacity wavelength division multiplexed optical communications system. The repeater (1) has a multi-stage optical amplifier in which a first optical amplifier stage (4) is pumped at a first wavelength by a first pump source (3) and a second optical amplifier stage (6) is pumped at a second wavelength by a second optical pump source (5). An optical processing element (7) is positioned between the first amplifier stage (4) and the second amplifier stage (6) to condition the output of the first amplifier stage (4) and an optical coupler (2) is adapted to couple the pump sources to the respective optical amplifiers. This amplifier topology provides tight dispersion control of high capacity optical transmission.

## Description

### Field of the Invention

The present invention relates to an optical amplifier suitable for use as an optical repeater in a high capacity optical communications system, and in particular a wavelength division multiplexed transmission system.

### Background to the Invention

In high capacity optical communications systems which operate at a line rate of say 10 Gbps or more, signal to noise ratios and dispersion impairments can introduce severe transmission limitations. At high bit rates it becomes very important to compensate for optical dispersion which accumulates. In optical amplifiers exhibiting population inversion there is a natural decay or transmission rate from upper to lower energy states. Such transitions result in the emission of photons unrelated to the optical signal, and this spontaneous emission is the source of noise within amplifiers as it adds to the signal during amplification. In a typical multistage optical repeater the optical amplifiers are pumped from a pump source at 1480 nm to provide the required gain. However, the noise performance of 1480 nm pumps is poor. At 980 nm the noise performance is significantly better but the reliability of the amplifier is generally unsatisfactory at higher pump powers.

### Summary of the Invention

According to a first aspect of the present invention, a multistage optical amplifier comprises a first optical amplifier stage which is pumped at a first predetermined wavelength with light from a first pump source, a second optical amplifier stage which is pumped at a second predetermined wavelength with light from a second pump source, an optical processing element disposed between the first amplifier stage and the second amplifier stage to condition an optical output of the first amplifier stage, and an optical coupler which is adapted to couple each of the first pump source and second pump source to the first amplifier stage and second amplifier stage, respectively.

Preferably, the optical coupler comprises a single optical circulator. More preferably, the optical coupler is a 4-port optical circulator and the first and second optical amplifier stages and first and second pump sources are each coupled to a respective port of the optical circulator.

In one preferred example of the present invention, the first amplifier stage is counterpumped by the first pump source at a wavelength of 980 nm and the second amplifier stage is co-pumped by the second pump source at a wavelength of 1480 nm. The first pump source provides a degree of pre-amplification with a low noise figure whilst the second pump source is pumped strongly to provide the required gain for an optical signal.

Preferably, the first amplifier stage and second amplifier stage each comprise an Erbium doped fibre amplifier.

Where the optical signal is a multiplexed signal, the optical amplifier may comprise a multiplexer to demultiplex the signal into its constituent channels and each channel conditioned independently by a respective optical processing element before being re-multiplexed.

In one preferred example, the optical processing element comprises a dispersion compensating element to provide optical dispersion compensation for an optical output of the first amplifier stage. Preferably, the dispersion compensating element is arranged to provide dispersion compensation for an optical signal immediately prior to the second amplifier stage. More preferably, the dispersion compensating element is a chirped fibre grating. As an alternative, a length of dispersion compensating fibre and a reflective grating may be used.

Other forms of optical processing include variable gain/attenuation filtering and wavelength conversion, or a combination of these.

According to a second aspect of the present invention, an optical repeater comprises an optical amplifier according to the first aspect of the present invention.

According to a third aspect of the present invention, an optical communications system comprises one or more optical repeaters according to the second aspect of the present invention.

Preferably, the optical communications system is a high capacity system operating at a line rate of 10 Gbps or more.

Preferably, the optical communications system is a wavelength division multiplexed transmission system.

### Brief Description of the Drawings

An example of the present invention will now be described in detail with reference to the accompanying drawings, in which:
Figure 1 shows an example of an optical repeater in accordance with the present invention; and,
Figure 2 shows a high capacity optical communications network comprising a number of the optical repeaters of Figure 1.

### Detailed Description

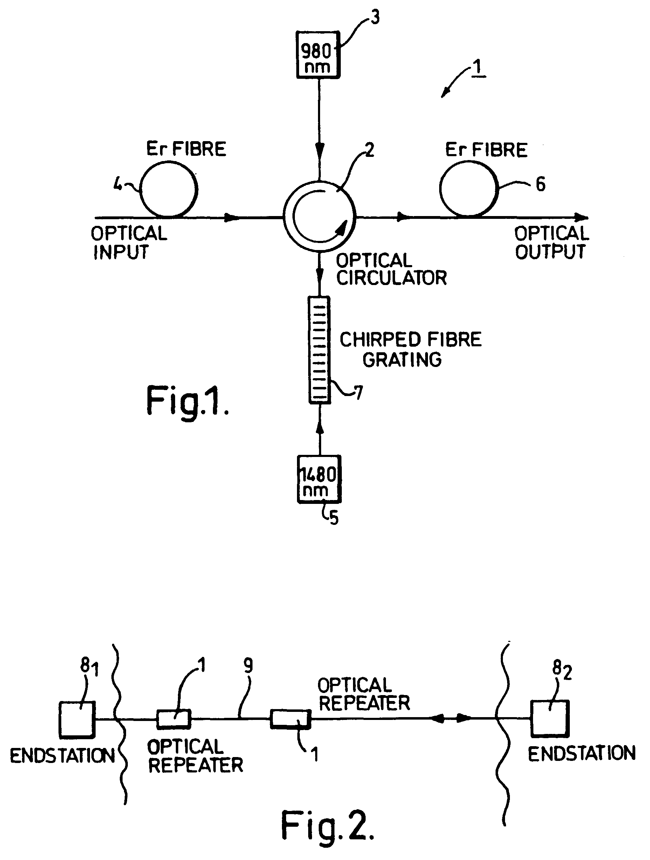

In Figure 1, an optical repeater 1 comprises a two-stage Erbium doped fibre amplifier which is constructed around an optical circulator 2. The amplifier includes a first pump source 3 which co-pumps a first stage amplifier 4 at 980 nm and a second pump source 5 which co-pumps a second stage amplifier 6 at 1480 nm. Each of the first amplifier stage 4, second amplifier stage 6, first pump source 3 and second pump source 5 are coupled to a respective port of the optical circulator 2. The optical circulator 2 provides inherent optical isolation for each arm so that a separate optical isolator is not required. As shown, a chirped fibre grating 7 is provided in one arm of the optical amplifier 1 to provide dispersion compensation.

The 980 nm counterpumped first stage 4 provides a degree of preamplification with a low noise figure while a high output power can be achieved by strongly pumping the second stage 6 at 1480 nm. In this case the 980 nm pump is not driven hard so that the inherent risk of failure of 980 nm pumped fibre amplifiers is reduced.

Incorporating the chirped fibre grating 7 in the amplifier topology provides tighter dispersion control of high capacity optical transmission.

Figure 2 shows an optical transmission system which includes a pair of endstations 8 connected by a high capacity transmission path 9 (operating at a line rate of 10 Gbps or more) having a number of the optical repeaters 1 of Figure 1.

## Claims

1. A multistage optical amplifier comprising a first optical amplifier stage (4) which is pumped at a first predetermined wavelength with light from a first pump source (3), a second optical amplifier stage (6) which is pumped at a second predetermined wavelength with light from a second pump source (5), an optical processing element (7) disposed between the first amplifier stage and the second amplifier stage to condition an optical output of the first amplifier stage (4), and an optical coupler (2) which is adapted to couple each of the first pump source (3) and second pump source (5) to the first amplifier stage (4) and second amplifier stage (6), respectively.

2. An optical amplifier according to claim 1, in which the optical coupler comprises a single optical circulator (2).

3. An optical amplifier according claim 1 or 2, in which the optical coupler is a 4-port optical circulator (2) and the first and second optical amplifier stages (4; 6) and first and second pump sources (3; 5) are each coupled to a respective port of the optical circulator (2).

4. An optical amplifier according to any preceding claim, in which the first amplifier stage (4) is counterpumped by the first pump source (3) at a wavelength of 980 nm and the second amplifier stage (6) is co-pumped by the second pump source (5) at a wavelength of 1480 nm.

5. An optical amplifier according to any preceding claim, in which the first amplifier stage (4) and second amplifier stage (6) each comprise an Erbium doped fibre amplifier.

6. An optical amplifier according to any preceding claim, in which the optical processing element comprises a dispersion compensating element (7) to provide optical dispersion compensation for an optical output of the first amplifier stage (4).

7. An optical amplifier according to claim 6, in which the dispersion compensating element (7) is arranged to provide dispersion compensation for an optical signal immediately prior to the second amplifier stage (6).

8. An optical amplifier according to claim 6 or 7, in which the dispersion compensating element is a chirped fibre grating (7).

9. An optical repeater (1) comprising an optical amplifier according to any preceding claim.

10. An optical communications system comprising one or more optical repeaters (1) according to claim 9.

11. An optical communications system according to claim 10, which is a high capacity system operating at a line rate of 10 Gbps or more.

12. An optical communications system according to claim 10 or 11, which is a wavelength division multiplexed transmission system.
